# EUROPÄISCHE PATENTSCHRIFT

(11) **EP 2 146 118 B1**
(45) Veröffentlichungstag und Bekanntmachung des Hinweises auf die Patenterteilung: **03.08.2011**
(21) Anmeldenummer: 09163062.4
(22) Anmeldetag: 18.06.2009
(51) Int. Cl.: F16H 63/32

(54) **Schaltgetriebe für ein Kraftfahrzeug**
Gearbox for a motor vehicle
Boîte de vitesse pour un véhicule automobile

(30) Priorität: 15.07.2008 DE 102008040396
(43) Veröffentlichungstag der Anmeldung: 20.01.2010
(73) Patentinhaber: ZF Friedrichshafen AG, 88038 Friedrichshafen (DE)
(72) Erfinder: Männer, Andreas, 88682, Salem (DE)

(56) Entgegenhaltungen:
- EP-A- 0 961 055
- DE-A1- 3 543 057
- DE-A1-102004 002 805
- DE-A1-102005 051 383
- DE-B- 1 115 138
- FR-A- 2 537 302

## Beschreibung

Die Erfindung betrifft ein Schaltgetriebe für ein Kraftfahrzeug mit einer Schalteinrichtung, welche mehrere Schaltschienen aufweist, von denen jede mit einem Übertragungsglied in Form einer Schaltgabel oder einer Schaltschwinge gekoppelt ist und über dieses bei einer translatorischen Bewegung der jeweiligen Schaltschiene eine Schaltbewegung einer zugeordneten Schiebemuffe bewirkt, um ein vorgegebenes Übersetzungsverhältnis zu schalten, wobei das zugeordnete Übertragungsglied jeweils an mindestens zwei beabstandet zueinander angeordneten Punkten über Lagerungen in einem Getriebegehäuse gelagert ist.

Bei Schaltgetriebe für Kraftfahrzeuge kann üblicherweise die Schaltung eines Übersetzungsverhältnisses mittels einer Schalteinrichtung entsprechend der Wahl durch den Fahrzeugführer stattfinden. Diese Schalteinrichtung weist dabei im Inneren des Getriebes Schaltschienen auf, von welchen jede einzelne jeweils einem Paar von Übersetzungsverhältnissen zugeordnet ist. Eine Schaltung des gewünschten Übersetzungsverhältnisses findet hierbei durch eine mit der entsprechenden Schaltschiene gekoppelte Schiebemuffe durch eine translatorische Bewegung der Schaltschiene in Richtung des zu kuppelnden Zahnradpaares statt. Zwischen der jeweiligen Schaltschiene und der zugeordneten Schiebemuffe ist dabei zur Übertragung der Bewegung jeweils ein Übertragungsglied angeordnet. Als Übertragungsglieder kommen hierbei zum einen entweder Schaltschwingen, welche rotatorisch gelagert sind und die translatorische Bewegung der Schaltschiene durch eine Schwenkbewegung auf die Schiebemuffe übertragen, oder zum anderen Schaltgabeln, welche translatorisch gelagert sind und die Schiebemuffe entsprechend der translatorischen Bewegung der Schaltschiene mitführen, zum Einsatz. Dabei sind die Lagerungen der Übertragungsglieder derart ausgebildet, dass die jeweilige Schaltschwinge eine Schwenkbewegung bzw. die jeweilige Schaltgabel eine translatorische Bewegung ausführen kann.

Aus der DE 41 18 931 A1 ist ein Schaltgetriebe eines Kraftfahrzeuges bekannt, bei welchem als Übertragungsglieder sowohl Schaltschwingen als auch Schaltgabeln zum Einsatz kommen. Hierzu ist jede Schaltschwinge bzw. jede Schaltgabel starr mit der jeweiligen Schaltschiene gekoppelt und zur Ausführung der Schwenkbewegung bzw. der translatorischen Bewegung auf nicht näher beschriebene Art und Weise im Getriebegehäuse gelagert.

In der DE 35 43 057 A1 ist des Weiteren eine Schalteinrichtung offenbart, bei welcher die Lagerungen einer Schaltschwinge über im Getriebegehäuse angeordnete Gelenkschrauben realisiert sind. Dem Fachmann wird hierbei klar sein, dass entlang dieser Gelenkschrauben auch eine translatorische Führung von Schaltgabeln erfolgen kann.

Nachteilhaft an den oben aufgezeigten Systemen ist, dass für jedes Übertragungsglied jeweils mindestens zwei eigene Lagerstellen mit dem entsprechenden Bauraum vorgesehen werden müssen. Des Weiteren stellt eine dieser Ausführung entsprechende Anzahl an Gelenkschrauben, welche durch das Getriebegehäuse hindurch geführt werden, eine Schnittstelle des Getriebeinneren zu der Umgebung des Getriebes dar, was jeweils eine entsprechende Abdichtung notwendig macht. Dies erhöht den Herstellungsaufwand.

Schließlich ist aus der gattungsbildenden DE 10 2005 051 383 A1 eine Schalteinrichtung bekannt geworden, welche mehrer Schaltschienen aufweist, von denen jede mit einem Übertragungsglied gekoppelt ist und über dieses bei einer translatorischen Bewegung der jeweiligen Schaltschienen eine Schaltbewegung einer zugeordneten Schiebemuffe bewirkt, um ein vorgegebenes Übersetzungsverhältnis zu schalten. Dabei ist das zugeordnete Übertragungsglied jeweils an mindestens zwei beabstandet zueinander angeordneten Punkten über Lagerungen in einem Getriebegehäuse gelagert und die Übertragungsglieder mindestens zweier Schaltschienen sind über gemeinsame Lagerungen gelagert.

Es ist daher die Aufgabe der vorliegenden Erfindung, ein Schaltgetriebe für ein Kraftfahrzeug zu schaffen, das sehr kompakt aufgebaut ist.

Diese Aufgabe wird ausgehend vom Oberbegriff des Anspruchs 1 in Verbindung mit dessen kennzeichnenden Merkmalen gelöst. Die darauf folgenden, abhängigen Ansprüche geben jeweils vorteilhafte Weiterbildungen der Erfindung wieder.

Die Erfindung umfasst die technische Lehre, dass die Übertragungsglieder mindestens zweier Schaltschienen über gemeinsame Lagerungen gelagert sind. Durch das Zusammenlegen der Lagerpunkte der Übertragungsglieder mindestens zweier Schaltschienen kann die Anzahl an Lagerstellen minimiert werden und somit zum einen Bauraum gespart und zum anderen die Anzahl an abzudichtenden Stellen im Getriebe reduziert werden. Des Weiteren kann eine derartige Lagerung bei geteilten Getriebegehäusen zum Einsatz kommen, was eine aufwendigere Anordnung der Lagerstellen entbehrlich macht.

Mit dem Begriff Lagerung ist hierbei im Falle eines Übertragungsgliedes in Form einer Schaltschwinge eine Drehlagerung und im Falle eines Übertragungsgliedes nach Art einer Schaltgabel eine Führung in translatorischer Richtung gemeint.

Gemäß der Erfindung sind jeweils eine Schaltgabel und eine Schaltschwinge über gemeinsame Lagerungen gelagert. Durch eine Anordnung, bei welcher am unteren Ende der jeweiligen Lagerstelle eine Schaltschwinge rotierbar gelagert ist und direkt darüber eine Schaltgabel verschiebbar geführt ist, lässt sich bei einem Getriebe mit beiden Varianten als Übertragungsgliedern ein kompakter Aufbau realisieren.

In Weiterbildung der Erfindung sind die Lagerungen nach Art von Gelenkschrauben ausgebildet. Vorteilhaft ist hierbei, dass dadurch eine Lagerung der Übertragungsglieder auf einfache Art und Weise und somit mit niedrigem Herstellungsaufwand verwirklicht werden kann.

Gemäß einer weiteren Ausgestaltung der Erfindung ist eine Koppelung der jeweiligen Schaltgabel mit der jeweiligen Schaltschiene über einen Hebelmechanismus realisiert. Dies hat den Vorteil, dass sich entsprechend des Hebelverhältnisses beliebige Schaltübersetzungen im Getriebe verwirklichen lassen. Des Weiteren stellt diese Art der Koppelung eine nicht starre Mitnahme dar, was eine Übertragung von Biegemomenten in das Schaltschienenpaket und somit deren Durchbiegung verhindert.

In Weiterbildung der Erfindung ist eine Koppelung der jeweiligen Schaltgabel mit der jeweiligen Schaltschiene mittels einer gabelartigen Ausbildung der Schaltschiene realisiert. Dadurch lässt sich eine nicht starre Mitnahme verwirklichen, während gleichzeitig der Herstellungsaufwand gering gehalten werden kann.

Gemäß einer weiteren vorteilhaften Ausführungsform der Erfindung ist die jeweilige Schaltgabel entlang ihrer translatorischen Bewegungsrichtung mittels eines Stiftes geführt. Durch die Führung entlang eines in einem Getriebegehäuseteil oder einem anderen feststehenden Teil platzierten Stiftes kann eine Abstützung der Schaltgabel verbessert und somit auch die Sicherheit des Gesamtsystems erhöht werden.

In Weiterbildung der Erfindung verfügt die jeweilige Schaltgabel über einen zum Querschnitt der am nächsten gelegenen Schaltschiene korrespondierenden Ansatz, mit welchem sie bei Ausführung einer Schaltbewegung entlang dieser Schaltschiene gleitet. Durch diese Maßnahme kann eine Abstützung der Schaltgabel entlang des Schaltschienenpakets erfolgen, was sich mit niedrigem Herstellungsaufwand realisieren lässt.

In Weiterbildung der Erfindung verfügt die jeweilige Schaltgabel im Bereich der Lagerungen über Langlöcher. Dadurch kann die Schaltgabel bezüglich des jeweiligen Lagerpunktes eine translatorische Bewegung durchführen.

Gemäß einer weiteren vorteilhaften Ausgestaltung der Erfindung sind die Gelenkschrauben von außen durch das Getriebegehäuse hindurch geführt angeordnet. Mittels einer derartigen Konstruktion kann eine Montage der Gelenkschrauben und somit eine Platzierung der Lagerstellen von außen erfolgen.

Weitere, die Erfindung verbessernden Maßnahmen werden nachstehend gemeinsam mit der Beschreibung bevorzugter Ausführungsbeispiele der Erfindung anhand der Zeichnung näher dargestellt.

Es zeigt:
- Fig. 1: eine Seitenansicht einer Getriebewelle mit Elementen der Schalt- einrichtung des erfindungsgemäßen Schaltgetriebes gemäß einer ersten Ausführungsform;
- Fig. 2: eine Vorderansicht der Getriebewelle des Schaltgetriebes aus Fig. 1; und
- Fig. 3: eine Detailansicht einer Schalteinrichtung des erfindungsgemäßen Schaltgetriebes gemäß einer zweiten Ausführungsform.

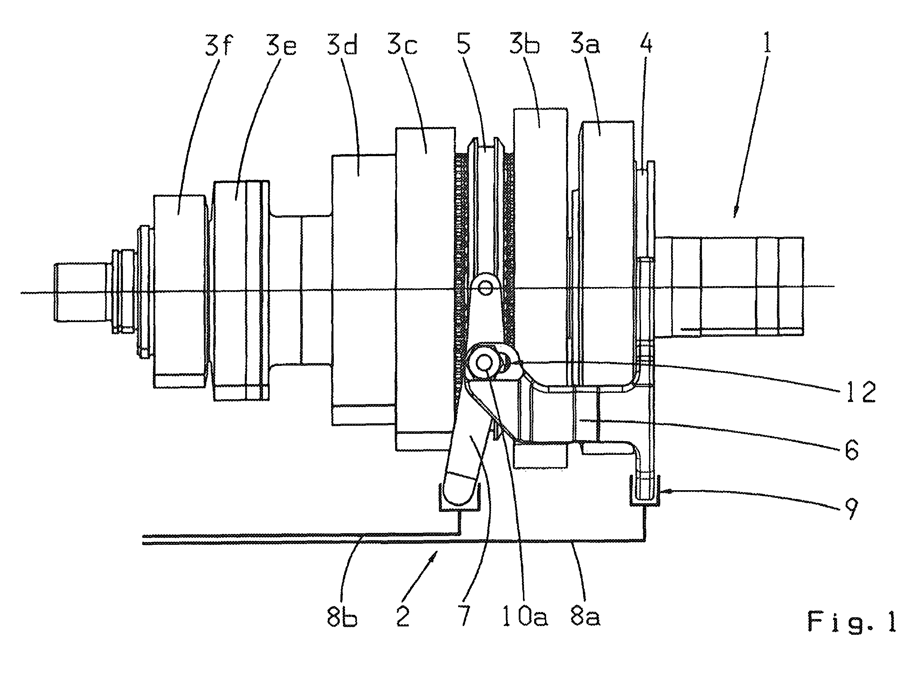

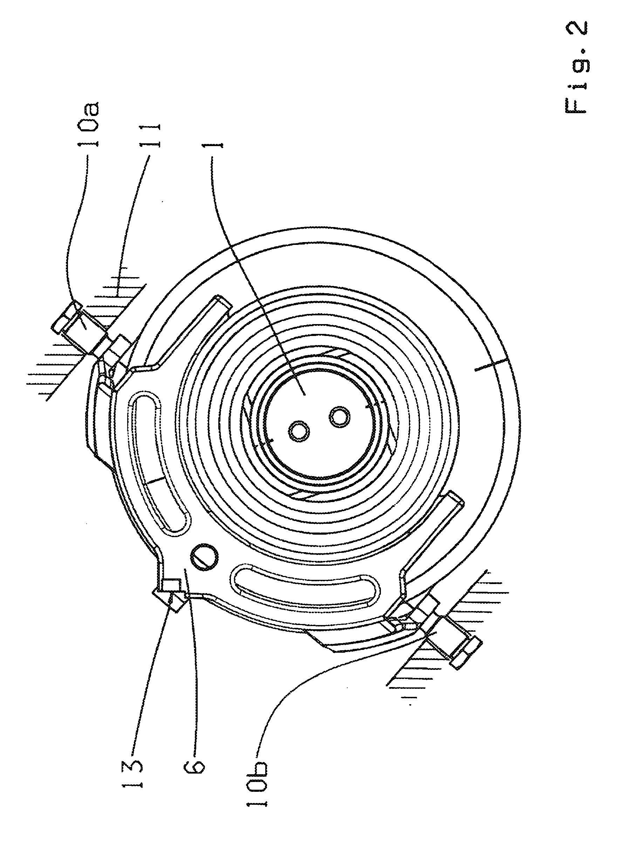

In Fig. 1 ist eine Seitenansicht einer Getriebewelle 1 mit Elementen einer Schalteinrichtung 2 gemäß einer ersten Ausführungsform des erfindungsgemäßen Schaltgetriebes zu sehen. Auf der Getriebewelle 1 ist eine bestimmte Anzahl an Stirnrädern 3a bis 3f platziert, welche jeweils mit einem gegenüberliegenden Stirnrad einer hier nicht dargestellten, weiteren Getriebewelle zur Darstellung definierter Übersetzungsverhältnisse im Eingriff stehen. Eine Schaltung des gewünschten Übersetzungsverhältnisses wird hierbei durch eine translatorische Bewegung einer jeweils zwischen den Stirnrädern 3a- 3f angeordneten und in Fig. 1 nur im Bereich der Stirnräder 3a bis 3c angedeuteten Schiebemuffe 4 oder 5 bewerkstelligt. Um jeweils diese translatorische Bewegung einzuleiten, steht Schiebemuffe 4 mit einer Schaltgabel 6 in Kontakt, während in Schiebemuffe 5 eine Schaltschwinge 7 eingreift. Dabei bewirkt die Schaltgabel 6 eine translatorische Bewegung der Schiebemuffe 4 durch eine Bewegung in die entsprechende Richtung aufgrund einer translatorischen Bewegung einer zugeordneten Schaltschiene 8a, welche hier nur schematisch angedeutet ist. Zur Übertragung der Bewegung weist die Schaltschiene 8a hierbei eine gabelartige Ausbildung 9 auf, mit welcher sie die Schaltgabel an einem Ansatz umgreift. Die Schaltschwinge 7 steht ebenfalls mit einer Schaltschiene 8b in Wirkverbindung und erzeugt eine translatorische Bewegung der Schiebemuffe 5 durch eine Kippbewegung. Als Besonderheit sind zum Ausführen der jeweiligen Bewegung die Schaltgabel 6 und Schaltschwinge 7 über zwei gemeinsame Gelenkschrauben 10a und 10b gelagert. Wie in Fig. 2 zu sehen ist, sind diese Gelenkschrauben 10a und 10b an zueinander beabstandet angeordneten Punkten in einem, hier nur teilweise dargestellten Getriebegehäuse 11 platziert. Entsprechend dieser Lagerung führt die Schaltschwinge 7 um die durch die Gelenkschrauben 10a und 10b definierten Punkte eine Kippbewegung aus. Dagegen weist Schaltgabel 6 im Bereich jeder Gelenkschraube 10a und 10b ein Langloch 12 auf, um eine translatorische, geführte Bewegung bezüglich der Gelenkschrauben 10a und 10b ausführen zu können. In Fig. 2 ist außerdem zu erkennen, dass die Schaltgabel 6 im Bereich der hier nicht zu sehenden Schaltschienen 8a und 8b über einen Ansatz 13 verfügt, über welchen sie beim Verschieben an den Schaltschienen 8a und 8b zusätzlich geführt wird.

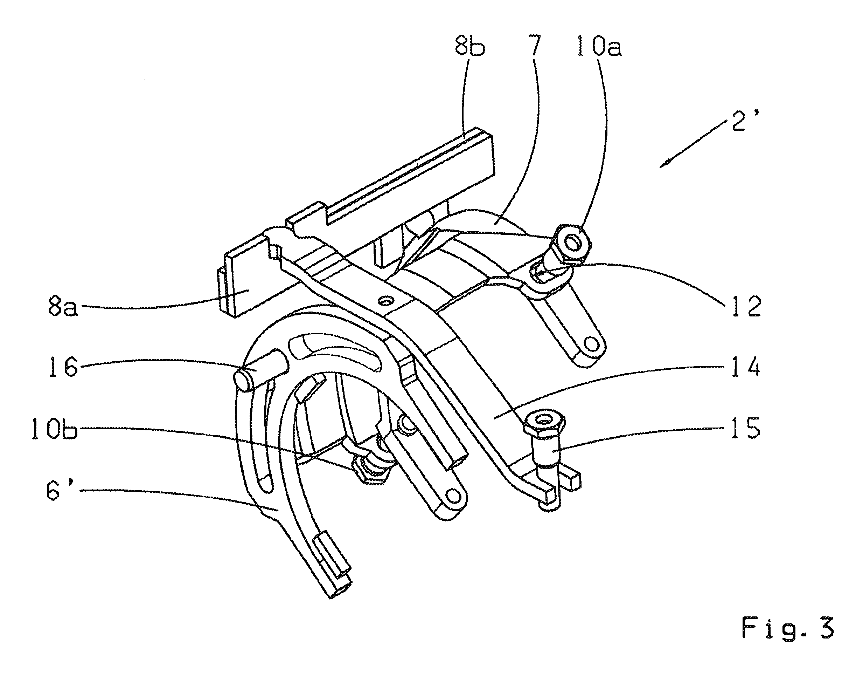

In Fig. 3 ist eine perspektivische Ansicht einer Schalteinrichtung 2' ohne sonstige Getriebebestandteile des erfindungsgemäßen Schaltgetriebes gemäß einer zweiten Ausführungsform zu sehen. Im Unterschied zu der vorher aufgezeigten Schalteinrichtung steht in diesem Fall eine Schaltgabel 6' über einen Hebelmechanismus 14 mit der entsprechenden Schaltschienen 8a in Verbindung, wobei dieser Hebelmechanismus eine Bewegung um eine weitere Gelenkschraube 15 ausführt. Des Weiteren wird die Schaltgabel 6' zusätzlich bei einer translatorischen Bewegung über einen Stift 16 geführt, weicher an dem hier nicht dargestellten Getriebegehäuse oder einem anderen feststehenden Teil befestigt ist.

### Bezugszeichen

- 1: Getriebewelle
- 2,2': Schalteinrichtung
- 3a - 3f: Stirnräder
- 4: Schiebemuffe
- 5: Schiebemuffe
- 6, 6': Schaltgabel
- 7: Schaltschwinge
- 8a, 8b: Schaltschienen
- 9: gabelförmige Ausbildung
- 10a, 10b: Gelenkschrauben
- 11: Getriebegehäuse
- 12: Langloch
- 13: Ansatz
- 14: Hebelmechanismus
- 15: Gelenkschraube
- 16: Stift

## Patentansprüche

1. Schaltgetriebe für ein Kraftfahrzeug mit einer Schalteinrichtung (2; 2'), welche mehrere Schaltschienen (8a, 8b) aufweist, von denen jede mit einem Übertragungsglied (6; 6'; 7) gekoppelt ist und über dieses bei einer translatorischen Bewegung der jeweiligen Schaltschiene (8a; 8b) eine Schaltbewegung einer zugeordneten Schiebemuffe (4; 5) bewirkt, um ein vorgegebenes Übersetzungsverhältnis zu schalten, wobei das zugeordnete Übertragungsglied (6; 6'; 7) jeweils an mindestens zwei beabstandet zueinander angeordneten Punkten über Lagerungen in einem Getriebegehäuse (11) gelagert ist, wobei die Übertragungsglieder (6, 6', 7) mindestens zweier Schaltschienen (8a, 8b) über gemeinsame Lagerungen gelagert sind, **dadurch gekennzeichnet, dass** jeweils eine Schaltgabel (6; 6') und eine Schaltschwinge (7) als Übertragungsglieder vorgesehen sind und über die gemeinsamen Lagerungen gelagert sind, und im Falle des Übertragungsgliedes in Form einer Schaltschwinge (7) eine Drehlagerung und im Falle des Übertragungsgliedes nach Art einer Schaltgabel (6, 6') eine Führung in translatorischer Richtung vorgesehen ist.

2. Schaltgetriebe nach Anspruch 1, **dadurch gekennzeichnet, dass** die Lagerungen nach Art von Gelenkschrauben (10a, 10b) ausgebildet sind.

3. Schaltgetriebe nach einem der Ansprüche 1 oder 2, **dadurch gekennzeichnet, dass** eine Koppelung der jeweiligen Schaltgabel (6') mit der jeweiligen Schaltschiene (8a) über einen Hebelmechanismus (14) realisiert ist.

4. Schaltgetriebe nach einem der Ansprüche 1-3, **dadurch gekennzeichnet, dass** eine Koppelung der jeweiligen Schaltgabel (6) mit der jeweiligen Schaltschiene (8a) mittels einer gabelartigen Ausbildung (9) der Schaltschiene (8a) realisiert ist.

5. Schaltgetriebe nach einem der vorhergehenden Ansprüche,
**dadurch gekennzeichnet, dass** die jeweilige Schaltgabel (6') entlang ihrer translatorischen Bewegungsrichtung mittels eines Stiftes (16) geführt ist.

6. Schaltgetriebe nach einem der vorhergehenden Ansprüche,
**dadurch gekennzeichnet, dass** die jeweilige Schaltgabel (6) über einen zum Querschnitt der am nächsten gelegenen Schaltschiene korrespondierenden Ansatz (13) verfügt, mit welchem sie bei Ausführung einer Schaltbewegung entlang dieser Schaltschiene gleitet.

7. Schaltgetriebe nach einem der vorhergehenden Ansprüche,
**dadurch gekennzeichnet, dass** die jeweilige Schaltgabel (6; 6') im Bereich der Lagerungen über Langlöcher (12) verfügt.

8. Schaltgetriebe nach Anspruch 3, **dadurch gekennzeichnet, dass** die Gelenkschrauben (10a, 10b) von außen durch das Getriebegehäuse (11) hindurch geführt angeordnet sind.

## Claims

1. Shift gearbox for a motor vehicle, having a shift device (2; 2') which has a plurality of shift rails (8a, 8b), each of which is coupled to a transmission member (6; 6'; 7) and, via the latter, during a translatory movement of the respective shift rail (8a; 8b), effects a shift movement of an associated sliding sleeve (4; 5) in order to engage a predefined gear ratio, the associated transmission member (6; 6'; 7) being mounted in a gearbox housing (11) by means of bearings at at least two spaced-apart points in each case, the transmission members (6, 6', 7) of at least two shift rails (8a, 8b) being mounted by means of common bearings, **characterized in that** in each case one shift fork (6; 6') and one shift rocker (7) are provided as transmission members and are mounted by means of the common bearings, and a rotary bearing is provided in the case of the transmission member in the form of a shift rocker (7), and a guide in the translatory direction is provided in the case of the transmission member in the form of a shift fork (6, 6').

2. Shift gearbox according to Claim 1, **characterized in that** the bearings are formed in the manner of pivot screws (10a, 10b).

3. Shift gearbox according to either of Claims 1 and 2, **characterized in that** coupling of the respective shift fork (6') to the respective shift rail (8a) is realized by means of a lever mechanism (14).

4. Shift gearbox according to one of Claims 1 to 3, **characterized in that** coupling of the respective shift fork (6) to the respective shift rail (8a) is realized by means of a fork-like design (9) of the shift rail (8a).

5. Shift gearbox according to one of the preceding claims, **characterized in that** the respective shift fork (6') is guided along its translatory movement direction by means of a pin (16).

6. Shift gearbox according to one of the preceding claims, **characterized in that** the respective shift fork (6) has a shoulder (13) corresponding to the cross section of the closest shift rail, by means of which shoulder (13) said shift fork slides along said shift rail while performing a shift movement.

7. Shift gearbox according to one of the preceding claims, **characterized in that** the respective shift fork (6; 6') has slots (12) in the region of the bearings.

8. Shift gearbox according to Claim 3, **characterized in that** the articulated screws (10a, 10b) are arranged guided through the gearbox housing (11) from the outside.

## Revendications

1. Boîte de vitesses pour un véhicule automobile, comprenant un dispositif de changement de vitesse (2 ; 2') qui présente plusieurs rails de changement de vitesse (8a, 8b) dont chacun est accouplé à un organe de transmission (6 ; 6' ; 7) et produit par le biais de celui-ci, dans le cas d'un mouvement de translation du rail de changement de vitesse respectif (8a ; 8b), un mouvement de changement de vitesse d'un manchon coulissant associé (4 ; 5), afin de changer un rapport de démultiplication prédéfini, l'organe de transmission associé (6 ; 6' ; 7) étant monté à chaque fois au niveau d'au moins deux points espacés l'un de l'autre par le biais de supports sur palier dans un boîtier de boîte de vitesses (11), les organes de transmission (6, 6', 7) d'au moins deux rails de changement de vitesse (8a, 8b) étant montés sur des supports sur palier communs, **caractérisée en ce qu'**une fourchette de changement de vitesse (6 ; 6') et une bielle oscillante de changement de vitesse (7) sont à chaque fois prévues en tant qu'organes de transmission et sont montées par le biais des supports sur palier communs et dans le cas de l'organe de transmission en forme de bielle oscillante de changement de vitesse (7), un support sur palier pivotant est prévu, et dans le cas de l'organe de transmission en forme de fourchette de changement de vitesse (6, 6'), un guidage dans une direction de translation est prévu.

2. Boîte de vitesses selon la revendication 1, **caractérisée en ce que** les supports sur palier sont réalisés sous forme de vis d'articulation (10a, 10b).

3. Boîte de vitesses selon l'une quelconque des revendications 1 ou 2, **caractérisée en ce qu'**un accouplement de la fourchette de changement de vitesse respective (6') avec le rail de changement de vitesse associé (8a) est réalisé par le biais d'un mécanisme de levier (14).

4. Boîte de vitesses selon l'une quelconque des revendications 1 à 3, **caractérisée en ce qu'**un accouplement de la fourchette de changement de vitesse respective (6) avec le rail de changement de vitesse respectif (8a) est réalisé au moyen d'une réalisation en forme de fourche (9) du rail de changement de vitesse (8a).

5. Boîte de vitesses selon l'une quelconque des revendications précédentes, **caractérisée en ce que** la fourchette de changement de vitesse respective (6') est guidée le long de sa direction de déplacement en translation au moyen d'une goupille (16).

6. Boîte de vitesses selon l'une quelconque des revendications précédentes, **caractérisée en ce que** la fourchette de changement de vitesse respective (6) dispose d'une pièce rapportée (13) correspondant en section transversale au rail de changement de vitesse le plus proche, avec laquelle elle glisse le long de ce rail de changement de vitesse lors de la réalisation d'un déplacement de changement de vitesse.

7. Boîte de vitesses selon l'une quelconque des revendications précédentes, **caractérisée en ce que** la fourchette de changement de vitesse respective (6 ; 6') dispose de trous oblongs (12) dans la région des supports sur palier.

8. Boîte de vitesses selon la revendication 3, **caractérisée en ce que** les vis d'articulation (10a, 10b) sont disposées de manière guidée depuis l'extérieur à travers le boîtier de la boîte de vitesses (11).
